# EUROPEAN PATENT APPLICATION

(11) **EP 4 624 507 A1**
(43) Date of publication of application: **01.10.2025**
(21) Application number: 23894295.7
(22) Date of filing: 16.10.2023
(51) Int. Cl.: C08G 59/02

(54) **EPOXY GROUP-CONTAINING CYCLIC ORGANOPOLYSILOXANE, CURABLE COMPOSITION COMPRISING SAME, AND CURED PRODUCT THEREOF**

(30) Priority: 24.11.2022 JP 2022187409
(71) Applicant: SHIN-ETSU CHEMICAL CO., LTD., Tokyo 1000005 (JP)
(72) Inventor: TSUCHIDA Kazuhiro, Annaka-shi, Gunma 379-0224 (JP)
(74) Representative: Mewburn Ellis LLP
(86) International application number: PCT/JP2023/037429
(87) International publication number: WO 2024/111283

(57) **Abstract**

This epoxy group-containing cyclic organopolysiloxane represented by general formula (1) provides a cured product having excellent crack resistance and flexibility. 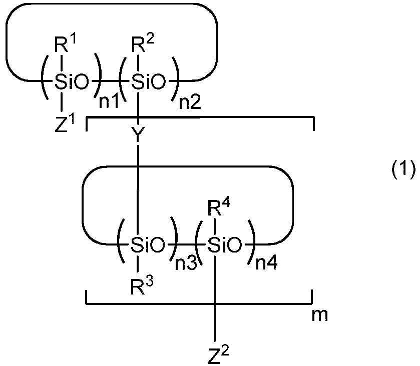 (R¹ to R⁴ each independently represent a C1-C20 monovalent hydrocarbon group with, optionally, an oxygen atom interposed; Y represents a bivalent hydrocarbon group; Z^{I} and Z² each independently represent a C1-C20 monovalent hydrocarbon group with, optionally, an oxygen atom interposed, an epoxy group-containing monovalent organic group with, optionally, an oxygen atom interposed, an alkoxysilyl alkyl group, or a hydrogen atom, but at least one thereamong is an epoxy group-containing monovalent organic group with, optionally, an oxygen atom interposed; n1 and n2 each independently represent an integer satisfying 1 to 5 and n1 + n2 = 3 to 6; n3 and n4 each independently represent an integer satisfying 1 to 5 and n3 + n4 = 3 to 6; and m represents an integer of 1 to 11.)

## Description

### TECHNICAL FIELD

The present invention relates to an epoxy group-containing cyclic organopolysiloxane, a curable composition comprising the same, and a cured product thereof, and more specifically relates to an organopolysiloxane in which epoxy group-containing cyclic siloxane backbones are linked through a linking group, a curable composition comprising the same, and a cured product thereof.

### BACKGROUND ART

Organopolysiloxanes having epoxy groups are better in heat yellowing resistance and low cure shrinkage than epoxy materials having non-siloxane-based phenolic resin backbones, and thus sealants and lens-forming materials using epoxy-functionalized polysiloxanes have been proposed for electronic material applications (Patent Documents 1 and 2).

It is also proposed that organopolysiloxanes having epoxy groups be applied as binders for coating materials that would take advantage of heat resistance and weather resistance of siloxane backbones (Patent Documents 3 to 6).

Meanwhile, cured products of conventional curable epoxy materials have a drawback of susceptibility to crack formation, and organopolysiloxanes having epoxy groups have not sufficiently been improved in such properties, either.

### PRIOR ART DOCUMENTS

### PATENT DOCUMENTS

Patent Document 1: JP-A 2005-171021
Patent Document 2: JP-A 2019-189874
Patent Document 3: JP-A 2015-112599
Patent Document 4: JP-A 2019-143161
Patent Document 5: JP-A 2019-108541
Patent Document 6: JP-A 2012-144678

### SUMMARY OF INVENTION

### TECHNICAL PROBLEM

The present invention has been made in view of the above-described circumstances, and an object of the present invention is to provide an epoxy group-containing organopolysiloxane that gives a cured product excellent in crack resistance and flexibility, a curable composition comprising the same, and a cured product thereof.

### SOLUTION TO PROBLEM

To achieve the above-described object, the present inventor has made intensive studies and consequently has found that an organopolysiloxane having a main backbone in which epoxy group-containing cyclic siloxanes are linked through a linking group gives a cured product with improved flexibility and crack resistance through polymerization of epoxy groups, thus completing the present invention.

Specifically, the present invention provides:
1. An epoxy group-containing cyclic organopolysiloxane represented by the following general formula (1): 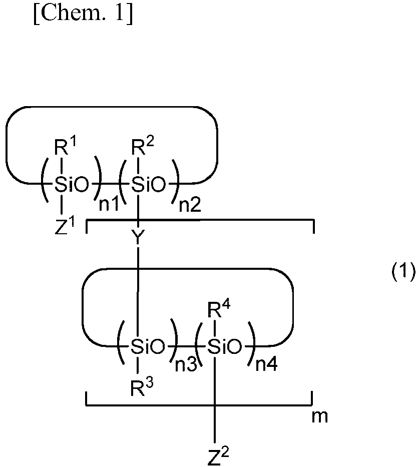 wherein R¹, R², R³, and R⁴ each independently represent a monovalent hydrocarbon group having 1 to 20 carbon atoms and optionally interrupted with an oxygen atom(s),
   Y represents a divalent hydrocarbon group,
   Z¹ and Z² each independently represent a monovalent hydrocarbon group having 1 to 20 carbon atoms and optionally interrupted with an oxygen atom(s), an epoxy group-containing monovalent organic group optionally interrupted with an oxygen atom(s), an alkoxysilylalkyl group, or a hydrogen atom, provided that at least one of Z¹ and Z² is an epoxy group-containing monovalent organic group optionally interrupted with an oxygen atom(s),
   n1 and n2 each independently represent an integer that is 1 to 5 and that satisfies n1 + n2 = 3 to 6,
   n3 and n4 each independently represent an integer that is 1 to 5 and that satisfies n3 + n4 = 3 to 6, and
   m represents an integer of 1 to 11.
2. The epoxy group-containing cyclic organopolysiloxane of 1, wherein R¹, R², R³, and R⁴ are methyl groups.
3. The epoxy group-containing cyclic organopolysiloxane of **1,** wherein Z¹ and Z² are one or more selected from a 3-glycidyloxypropyl group and a 2-(3,4-epoxycyclohexyl)ethyl group.
4. The epoxy group-containing cyclic organopolysiloxane of 1, wherein Y is a divalent saturated hydrocarbon group having a polycyclic structure.
5. The epoxy group-containing cyclic organopolysiloxane of 4, wherein Y is one or more selected from divalent saturated hydrocarbon groups represented by the following formulae (2a) and (2b): 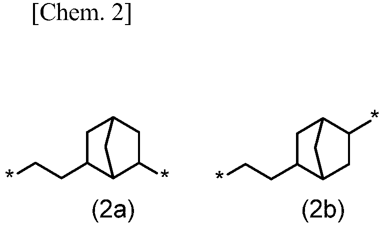 wherein asterisks (*) indicate points of attachment to silicon atoms, and the configuration of each asymmetric carbon may be either cis (exo) or trans (endo).
6. The epoxy group-containing cyclic organopolysiloxane of 1, wherein n1 and n4 are 3, and n2 and n3 are 1.
7. The epoxy group-containing cyclic organopolysiloxane of 1, wherein the epoxy functional group equivalent weight is 200 to 400 g/mol.
8. A curable composition, comprising:
   (A) 100 parts by weight of the epoxy group-containing cyclic organopolysiloxane of any one of 1 to 7; and
   (B) 0.01 to 5 parts by weight of a curing agent.
9. The curable composition of 8, comprising (C) 1 to 200 parts by weight of an epoxy group-containing compound other than (A).
10. The curable composition of 9, wherein the curing agent is a photoacid generator.
11. A cured product obtained by curing the curable composition of 9.

### ADVANTAGEOUS EFFECTS OF INVENTION

The present invention can provide an epoxy group-containing organopolysiloxane that gives a cured product having crack resistance and flexibility, and a curable composition comprising the same.

### DESCRIPTION OF EMBODIMENTS

Hereinafter, the present invention is described specifically.

### [1] Epoxy Group-Containing Organopolysiloxane

An epoxy group-containing cyclic organopolysiloxane according to the present invention is represented by the following general formula (1).

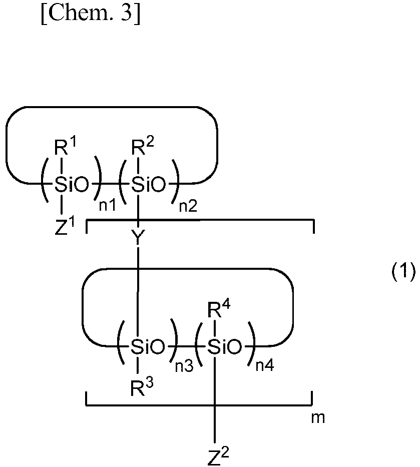

In formula (1), R¹, R², R³, and R⁴ each independently represent a monovalent hydrocarbon group having 1 to 20 carbon atoms and optionally interrupted with an oxygen atom(s).

The monovalent hydrocarbon group may be linear, branched, or cyclic, and specific examples thereof include alkyl groups such as methyl, ethyl, n-propyl, isopropyl, n-butyl, isobutyl, tert-butyl, n-hexyl, cyclohexyl, n-octyl, 2-ethylhexyl, and n-decyl groups; alkenyl groups such as vinyl, allyl (2-propenyl), 1-propenyl, isopropenyl, and butenyl groups; aryl groups such as phenyl, tolyl, xylyl, and naphthyl groups; aralkyl groups such as benzyl, phenylethyl, and phenylpropyl groups; and the like.

Of these examples, alkyl groups having 1 to 20 carbon atoms and aryl groups having 6 to 12 carbon atoms are preferable, alkyl groups having 1 to 10 carbon atoms are more preferable, alkyl groups having 1 to 5 carbon atoms are still more preferable, and a methyl group is further preferable.

Note that the above-described monovalent hydrocarbon group may be interrupted with an oxygen atom in a molecular chain thereof or at a Si-side terminal thereof, and, for example, may be an alkoxy group having 1 to 20 carbon atoms.

In formula (1), Y represents a divalent hydrocarbon group. This group is not particularly limited, and preferred are divalent saturated hydrocarbon groups having a polycyclic structure, more preferred are groups represented by the following formulae (2a), (2b) and (10a) to (10c), and still more preferred are groups represented by formulae (2a) and (2b).

Note that the left and right of the asymmetric divalent hydrocarbon groups represented by the following formulae are not limited to those shown below, but each asymmetric divalent hydrocarbon group may have a structure obtained by rotating the corresponding one of the following formulae by 180° on the page. Moreover, the hydrocarbon groups represented by the following formulae may have these structures in combination. 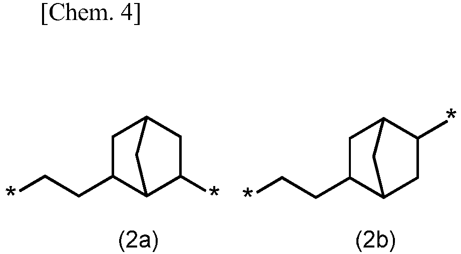 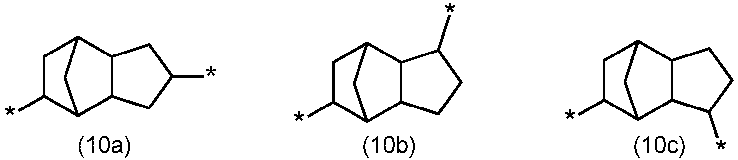 wherein asterisks (*) indicate points of attachment to silicon atoms, and the configuration of each asymmetric carbon may be either cis (exo) or trans (endo).

In formula (1), Z¹ and Z² each independently represent a monovalent hydrocarbon group having 1 to 20 carbon atoms and optionally interrupted with an oxygen atom(s), an epoxy group-containing monovalent organic group optionally interrupted with an oxygen atom(s), an alkoxysilylalkyl group, or a hydrogen atom, provided that at least one of Z¹ and Z² is an epoxy group-containing monovalent organic group optionally interrupted with an oxygen atom(s).

Monovalent hydrocarbon groups for Z¹ and Z² include the same groups as those shown as examples of R¹ to R⁴ above.

The epoxy group-containing monovalent organic group is not particularly limited, as long as the group contains an epoxy group, and the group is particularly preferably a 3-glycidyloxypropyl group or a 2-(3,4-epoxycyclohexyl)ethyl group.

Alkoxysilylalkyl groups include 2-(trimethoxysilyl)ethyl, 2-(methyldimethoxysilyl)ethyl, 2-(dimethylmethoxysilyl)ethyl, 2-(triethoxysilyl)ethyl, 2-(methyldiethoxysilyl)ethyl, 2-(dimethylethoxysilyl)ethyl, 6-(trimethoxysilyl)hexyl, and 8-(trimethoxysilyl)octyl groups, and the like.

In formula (1), n1 and n2 each independently represent an integer that is 1 to 5 and that satisfies n1 + n2 = 3 to 6, and n3 and n4 each independently represent an integer that is 1 to 5 and that satisfies n3 + n4 = 3 to 6. It is particularly preferable that n1 and n4 be 3, and n2 and n3 be 1.

Meanwhile, m represents an integer of 1 to 11.

Epoxy group-containing cyclic organopolysiloxanes represented by the above-described formula (1) are preferably, but not limited to, compounds represented by the following (4) to (7), because raw materials thereof are readily available, and these compounds have excellent compatibility with general-purpose epoxy binders. Note that Me means a methyl group, hereinbelow. 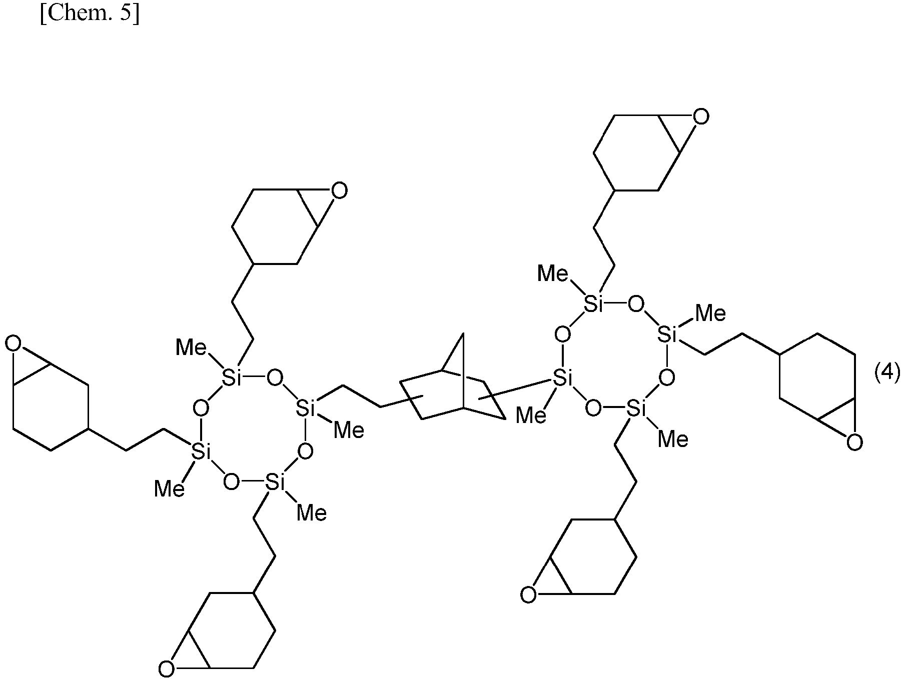 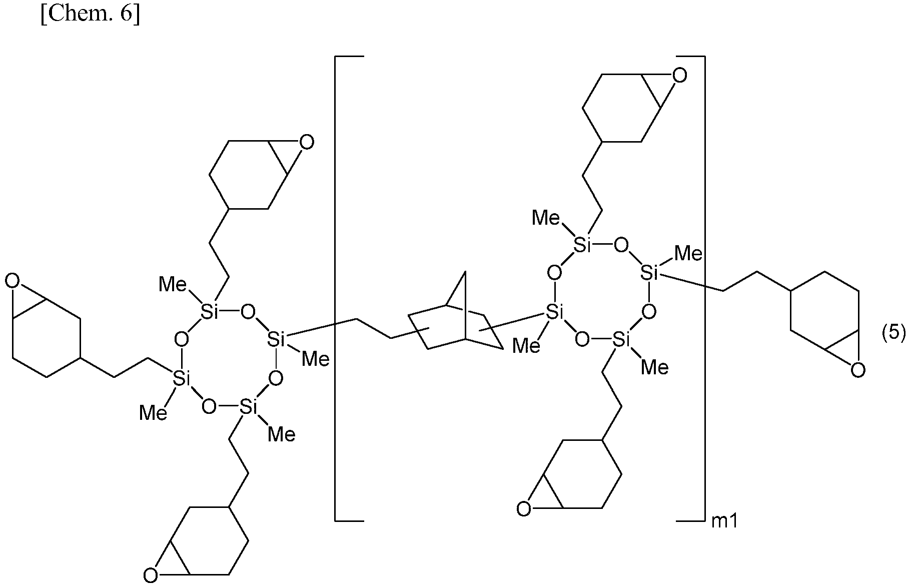 wherein m1 represents an integer of 2 to 11. 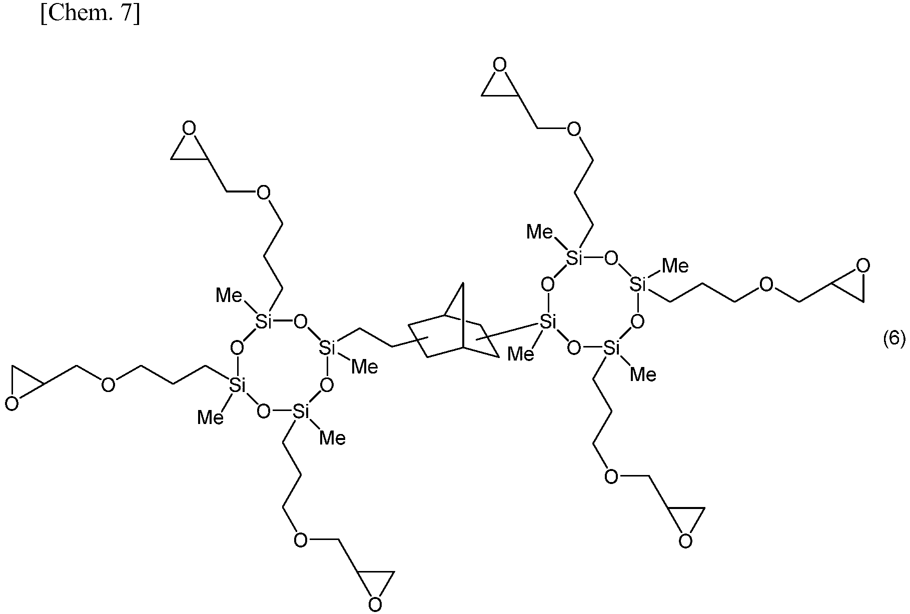 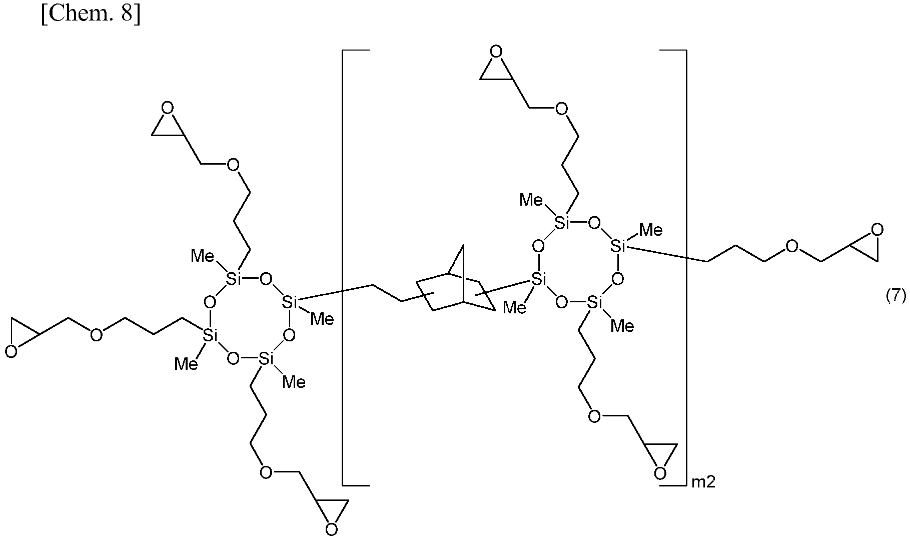 wherein m2 represents an integer of 2 to 11.

The epoxy group-containing cyclic organopolysiloxane compound of the present invention can be obtained, for example, by causing an addition reaction between a cyclic organohydrogenpolysiloxane represented by the following formula (3) and a compound having one carbon-carbon double bond capable of addition reaction in one molecule and having an epoxy group(s).

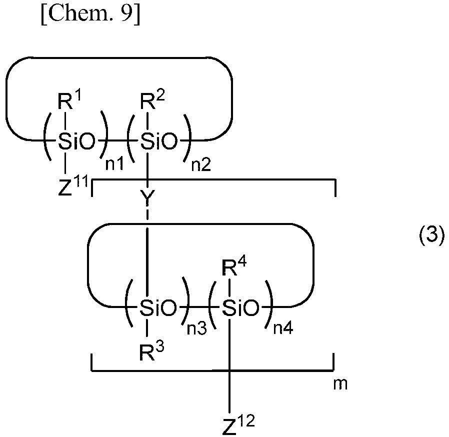

In formula (3), R¹ to R⁴, Y, n1 to n4, and m have the same meanings as those described above, and Z¹¹ and Z¹² each independently represent a monovalent hydrocarbon group having 1 to 20 carbon atoms and optionally interrupted with an oxygen atom(s), or a hydrogen atom, provided that at least one of Z¹¹ and Z¹² is a hydrogen atom.

Monovalent hydrocarbon groups for Z¹¹ and Z¹² include the same groups as those shown as examples of R¹ to R⁴ above.

Specific examples of the compound represented by the above-described formula (3) include, but are not limited to, those represented by the following formula (8). 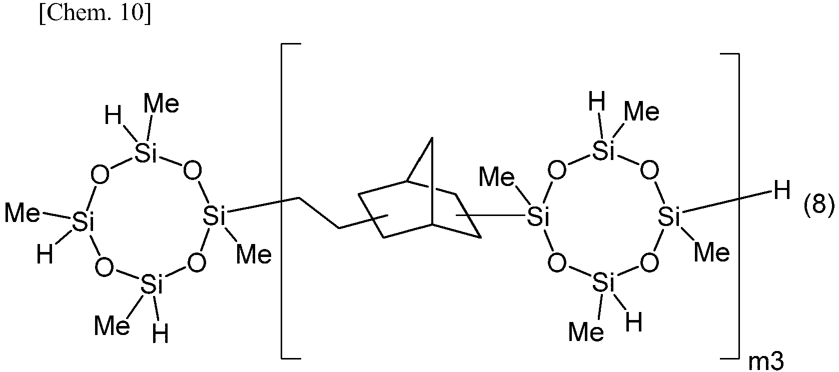 wherein m3 represents an integer of 1 to 11.

The compound having one carbon-carbon double bond capable of addition reaction in one molecule and having an epoxy group(s) is not particularly limited, and is preferably allyl glycidyl ether, hexenyl glycidyl ether, octenyl glycidyl ether, vinylcyclohexene oxide, or the like, and is more preferably allyl glycidyl ether or vinylcyclohexene oxide from the viewpoint of market availability.

The amount of the compound used is preferably 1 to 10 mol and more preferably 1.5 to 5 mol per mole of hydrogen atoms (Si-H groups) bonded to silicon atoms in the compound represented by the above-described formula (3), from the viewpoint of the heat stability and productivity of the epoxy group-containing cyclic organopolysiloxane to be obtained.

A known catalyst commonly used for hydrosilylation addition reaction can be used as a catalyst used for the addition reaction, and examples thereof include platinum metal-supporting carbon powder, platinum(IV) chloride, chloroplatinic acid, reaction products of chloroplatinic acid with monovalent alcohols, complexes of chloroplatinic acid with olefins; platinum-group-metal-based catalysts such as palladium-based catalysts and rhodium-based catalysts, and the like.

The amount of the catalyst used is preferably 2% by weight or less, and more preferably 5 to 5,000 ppm, relative to the total amount of the compound represented by the above-described formula (3), in view of the prevention of side reactions to prevent the product from being colored.

A solvent may be used for the addition reaction.

The solvent is preferably one capable of dissolving the compound represented by the above-described formula (3) and the compound having one carbon-carbon double bond capable of addition reaction in one molecule and having an epoxy group(s).

Usable solvents include hydrocarbon solvents such as pentane, hexane, cyclohexane, heptane, isooctane, toluene, xylene, and mesitylene; alcohol solvents such as methanol, ethanol, and isopropanol, aprotic polar solvents such as acetonitrile, propionitrile, N,N-dimethylformamide, and N-methylpyrrolidone; halogenated hydrocarbon solvents such as dichloromethane, dichloroethane, and chlorobenzene; ether solvents such as diethyl ether, tetrahydrofuran, dioxane, and dimethoxyethane; and the like. One of these solvents may be used alone, or two or more thereof may be used as a mixture.

The reaction temperature is preferably 20 to 150°C, and more preferably 60 to 100°C, from the viewpoints of improvement in productivity by shortening the reaction time and of the prevention of side reactions to prevent the product from being colored.

The reaction time may be any length of time within which the reaction proceeds to sufficiently consume the raw materials. The reaction time is preferably 10 minutes to 24 hours, more preferably 1 to 10 hours, and further preferably 2 to 7 hours, from the viewpoint of production efficiency.

The weight average molecular weight of the epoxy group-containing cyclic organopolysiloxane of the present invention is not particularly limited, and the weight average molecular weight is preferably 1,500 to 20,000, more preferably 2,000 to 15,000, and further preferably 3,000 to 10,000, in view of impartment of sufficient hardness and flexing endurance to a cured product obtained by curing a curable composition comprising the organopolysiloxane. Note that the weight average molecular weight in the present invention is a value in terms of standard polystyrene determined by gel permeation chromatography (GPC).

The epoxy functional group equivalent weight of the epoxy group-containing cyclic organopolysiloxane of the present invention is not particularly limited, and is preferably 200 to 400 g/mol, and more preferably 250 to 350 g/mol in view of impartment of sufficient hardness and flexing endurance to a cured product obtained by curing a curable composition comprising the organopolysiloxane.

### [2] Curable Composition

A curable composition of the present invention is constituted by comprising (A) the above-described epoxy group-containing cyclic organopolysiloxane; and (B) a curing agent.

The curing agent serving as component (B) is not particularly limited and is preferably a photoacid generator (photo-cationic polymerization initiator), which generates a cationic species upon irradiation with light to initiate a curing reaction of a cationically curable compound, from the viewpoint of production efficiency.

Examples of the photoacid generator include diazonium salt-based compounds, iodonium salt-based compounds, sulfonium salt-based compounds, phosphonium salt-based compounds, selenium salt-based compounds, oxonium salt-based compounds, ammonium salt-based compounds, bromine salt-based compounds, and the like. Of these examples, it is preferable to use a sulfonium salt-based compound in the present invention from the viewpoint that a cured product excellent in curing characteristics can be formed.

Examples of the cation moiety of the sulfonium salt-based compound include aryl sulfonium ions (particularly, triarylsulfonium ions) such as triphenylsulfonium ion, diphenyl[4-(phenylthio)phenyl]sulfonium ion, tri-p-tolyl sulfonium ion, (4-hydroxyphenyl)methylbenzylsulfonium ion, and 4-(4-biphenylylthio)phenyl-4-biphenylylphenylsulfonium ion; and the like.

Examples of the anion moiety include [(Ar)ₛB(Phf)₄₋ₛ]⁻, wherein Ar represents a phenyl group or a biphenylyl group, Phf represents a phenyl group in which at least one hydrogen atom is substituted with at least one selected from perfluoroalkyl groups, perfluoroalkoxy groups, and halogen atoms, and s represents an integer of 0 to 3; BF₄⁻, [(Rf)_{L}PF_{6-L}]⁻, wherein Rf represents an alkyl group in which 80% or more of the hydrogen atoms are substituted with fluorine atoms, and L is an integer of 0 to 5; AsF₆⁻; SbF₆⁻; pentafluorohydroxyantimonate; and the like.

Specific examples of the photoacid generator include (4-hydroxyphenyl)methylbenzylsulfonium tetrakis(pentafluorophenyl)borate, 4-(4-biphenylylthio)phenyl-4-biphenylylphenylsulfonium tetrakis(pentafluorophenyl)borate, 4-(phenylthio)phenyldiphenylsulfonium phenyltris(pentafluorophenyl)borate, [4-(4-biphenylylthio)phenyl]-4-biphenylylphenylsulfonium phenyltris(pentafluorophenyl)borate, diphenyl[4-(phenylthio)phenyl]sulfonium tris(pentafluoroethyl)trifluorophosphate, diphenyl[4-(phenylthio)phenyl]sulfonium tetrakis(pentafluorophenyl)borate, diphenyl[4-(phenylthio)phenyl]sulfonium hexafluorophosphate, 4-(4-biphenylylthio)phenyl-4-biphenylylphenylsulfonium tris(pentafluoroethyl)trifluorophosphate, bis[4-(diphenylsulfonio)phenyl] sulfide phenyltris(pentafluorophenyl)borate, [4-(2-thioxanthonylthio)phenyl]phenyl-2-thioxanthonylsulfonium phenyltris(pentafluorophenyl)borate, 4-(phenylthio)phenyldiphenylsulfonium hexafluoroantimonate, and the like. It is possible to use, as these photoacid generators, commercially available products under the trade names "CYRACURE UVI-6970", "CYRACURE UVI-6974", "CYRACURE UVI-6990", "CYRACURE UVI-950" (these are manufactured by Union Carbide Corporation, US), "IRGACURE 250", "IRGACURE 261", "IRGACURE 264" (these are manufactured by Ciba Specialty Chemicals), "SP-150", "SP-151", "SP-170", "OPTOMER SP-171" (these are manufactured by ADEKA Corporation), "CG-24-61" (manufactured by Ciba Specialty Chemicals), "DAICAT II" (manufactured by Daicel Corporation), "UVAC 1590", "UVAC 1591" (these are manufactured by Daicel-Cytec Company, Ltd.), "CI-2064", "CI-2639", "CI-2624", "CI-2481", "CI-2734", "CI-2855", "CI-2823", "CI-2758", "CIT-1682" (these are manufactured by NIPPON SODA CO., LTD.), "PI-2074" (manufactured by Rhodia), toluylcumyliodonium tetrakis(pentafluorophenylborate)), "FFC 509" (manufactured by 3M Company), "BBI-102", "BBI-101", "BBI-103", "MPI-103", "TPS-103", "MDS-103", "DTS-103", "NAT-103", "NDS-103" (these are manufactured by Midori Kagaku Co., Ltd.), "CD-1010", "CD-1011", "CD-1012" (these are manufactured by Sartomer), "CPI-100P", "CPI-101A", "CPI-200K" (these are manufactured by San-Apro Ltd.), and the like.

If necessary, the curable composition of the present invention may comprise, as component (C), a binder precursor other than component (A).

The binder precursor is not particularly limited, as long as it can work as a binder. Examples of the binder precursor include various binder precursors such as thermoplastic resin-based binder precursors including (meth)acrylic resin- and polyurethane resin-based binder precursors, and the like; photocurable (meth)acrylic-based binder precursors made of monofunctional or multifunctional (meth)acrylates; photocurable or thermocurable epoxy-based binder precursors made of monofunctional or multifunctional epoxy compounds; thermocurable acid anhydride-based binder precursors made of monofunctional or multifunctional acid anhydrides; thermocurable silicone-based binder precursors based on silanols; and the like.

Of these binder precursors, preferred are photocurable or thermocurable epoxy-based binder precursors made of monofunctional or multifunctional epoxy compounds and thermocurable acid anhydride-based binder precursors made of monofunctional or multifunctional acid anhydrides, from the viewpoints of the reactivity with the epoxy group-containing cyclic organopolysiloxane, the productivity, and the durability.

More preferred epoxy-based binder precursors include epoxy compounds that have a molecular weight of 100 to 3,000, have an epoxy functional group equivalent weight of 100 to 300 g/mol, and contain two or more, preferably two, epoxy groups in one molecule. In particular, the epoxy-based binder precursor is preferably an epoxy compound that has a cyclic organopolysiloxane structure represented by the following formula (C1) and has two or more, preferably 2 to 4, epoxy groups in one molecule, as in the case of component (A). 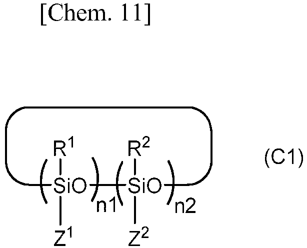 wherein R¹, R², Z¹, Z², n1, and n2 have the same meanings as those in the above-described formula (1), provided that at least two of Z¹ and Z² are epoxy group-containing monovalent organic groups optionally interrupted with an oxygen atom(s).

The amount of component (C) blended is preferably 1 to 200 parts by weight, and more preferably 5 to 100 parts by weight, relative to 100 parts by weight of component (A).

If necessary, it is also possible to use the curable composition of the present invention after dilution in an organic solvent. The organic solvent here is preferably a component that is capable of sufficiently dissolving the components and is not reactive with epoxy groups or the curing catalyst. Specific examples thereof include aliphatic and/or aromatic hydrocarbon compounds, ester compounds, ketone compounds, ether compounds, and the like. Of these solvents, preferred are isododecane, toluene, ethyl acetate, butyl acetate, methyl ethyl ketone, methyl isobutyl ketone, propylene glycol monomethyl ether acetate, and the like, from the viewpoint of market availability.

The curable composition of the present invention may further comprise, as other optional components, commonly used additives including inorganic fillers such as precipitated silica, wet-process silica, fumed silica, calcined silica, titanium oxide, alumina, glass, quartz, aluminosilicates, iron oxide, zinc oxide, calcium carbonate, carbon black, silicon carbide, silicon nitride, and boron nitride, inorganic fillers obtained by treating those fillers with an organosilicon compound such as an organohalosilane, an organoalkoxysilane, or an organosilazane; fine powders of organic resins such as silicone resins, epoxy resins, and fluororesins; fillers such as powders of electrically conductive metals such as silver or copper, curing aids, solvents (organic solvents and the like), stabilizers (antioxidants, ultraviolet absorbers, light stabilizers, heat stabilizers, heavy-metal deactivators, and the like), flame retardants (phosphorus-containing flame retardants, halogen-containing flame retardants, inorganic flame retardants, and the like), flame retardant aids, reinforcing materials (other fillers and the like), nucleating agents, coupling agents (silane coupling agents and the like), lubricants, waxes, plasticizers, release agents, impact resistance improvers, color improvers, clarifying agents, rheology modifiers (flowability improvers and the like), processability improvers, coloring agents (dyes, pigments, and the like), antistats, dispersing agents, surface conditioners (defoamers, leveling agents, anti-popping agents, and the like), surface modifiers (slipping agents and the like), flatting agents, defoamers, foam suppressors, defoaming agents, antibacterial agents, antiseptic agents, viscosity modifiers, thickeners, photosensitizers, blowing agents, and the like. One of these additives may be used alone, or two or more thereof may be used in combination.

By curing the curable composition of the present invention via light irradiation and/or heating, a corresponding cured product can be obtained. The form of the cured product is not particularly limited and may be a cured coating film on a base material, or may be a self-supporting cured molded product or sealing product. The curing method is preferably photocuring in view of productivity.

For photocuring the curable composition of the present invention, for example, the curable composition is applied onto a base material to achieve a desired film thickness, and then, if necessary, the solvent is evaporated, followed by irradiation with ultraviolet light, electron beams, or the like by using a high pressure mercury lamp, a metal halide lamp, an LED lamp, or the like. Regarding the atmosphere for irradiation, the irradiation may be conducted in air or in an inert gas such as nitrogen or argon. In the case of ultraviolet irradiation, for example, about 1 to 1,000 mJ/cm² is preferable.

Meanwhile, the conditions for thermally curing the curable composition of the present invention are not particularly limited, and, for example, 30 to 200°C is preferable, and 50 to 190°C is more preferable. The curing time may be set as appropriate.

The base material is not particularly limited and may be an organic resin such as a formed plastic product, a wood-based product, a textile, a ceramic, glass, a metal, a composite material thereof, or the like.

Of these base materials, the curable composition of the present invention can be used suitably for various plastic materials, and can be used suitably particularly for polycarbonate resins, polystyrene resins, acrylic resins, modified acrylic resins, urethane resins, thiourethane resins, polycondensates of halogenated bisphenol A and ethylene glycol, acrylic urethane resins, aryl halide group-containing acrylic resins, sulfur-containing resins, polyalkylene terephthalate resins, polyimide resins, polyamide resins, polycycloolefin resins, polyphenylene sulfide resins, polyphenylene oxide resins, cellulose resins, amorphous polyolefin resins, composite resins thereof, and the like.

Moreover, it is also possible to use materials obtained by subjecting these resin base materials to a surface treatment, specifically, materials obtained by subjecting these resin base materials to a chemical conversion treatment, a corona discharge treatment, a flame treatment, a plasma treatment, or an acid or alkali liquid treatment, and it is also possible to use a laminate having a surface layer coated with a resin of a type different from a main body of the base material. Specific examples of the laminate include a laminate in which an acrylic resin layer or a urethane resin layer is present on a surface layer of a polycarbonate resin base material and a laminate in which an acrylic resin layer is present on a surface layer of a polyester resin which are produced by a co-extrusion method or a lamination method, and the like.

Note that the curable composition of the present invention may be applied directly onto a surface of the base material, or, if required, may be applied onto a surface of the base material with a primer layer or an ultraviolet absorption layer, a print layer, a recording layer, a heat ray shielding layer, an adhesive layer, an inorganic vapor-deposition film layer, or the like interposed therebetween.

As the application method, it is possible to use, for example, an application method selected from known application methods such as a spin coater, a comma coater, a lip coater, a roll coater, a die coater, a knife coater, a blade coater, a rod coater, a kiss coater, a gravure coater, screen coating, dip coating, cast coating, and the like, as appropriate.

If required, other coating layers such as an adhesive layer, an ultraviolet absorption layer, a print layer, a recording layer, a heat ray shielding layer, an adhesive layer, an inorganic vapor-deposition film layer, a water- and oil-repellent layer, and a hydrophilic antifouling layer may be formed further on a surface of a cured coating film of the coating composition of the present invention.

The curable composition of the present invention can be processed into a self-supporting cured formed product not only by a method using a mold but also by a film formation method based on a casting method in which the curable composition is applied onto a film provided with a release layer in advance, followed by curing to obtain the product.

The material of the mold is not particularly limited, as long as a sufficient releasability from a cured product obtained after curing is achieved. For example, any of metal, glass, plastic, silicone, and Teflon (registered trademark, hereinafter the same)-coated molds may be used. Of these examples, a Teflon-coated mold is preferably used. A Teflon-coated mold has an excellent releasability in the present invention, and can suppress the occurrence of breakage of a cured product during the removal of the curable composition.

The cured product obtained from the curable composition of the present invention can have both crack resistance and flexibility and therefore can be applied to scratch-resistant coatings for plastic base materials, optical lenses, flexible display materials for electronic materials, and optical sealants for LED devices, and the like, as well as denture-forming materials, tooth filling agents, and the like.

### EXAMPLES

Hereinafter, the present invention is described more specifically by way of Synthesis Examples, Examples, and Comparative Examples; however, the present invention is not limited to these Examples. Note that, in the following Examples, "parts" and "%" mean "parts by weight" and "% by weight", respectively, unless otherwise stated. Moreover, instruments used in Examples were as follows.

(1) GPC Measurement Conditions

| | |
|---|---|
| Instrument: | HLC-8320GPC manufactured by Tosoh Corporation |
| Eluent: | tetrahydrofuran (THF) |
| Flow Rate: | 0.6 mL/min |
| Detector: | differential refractive index detector (RI) |
| Columns: | TSK Guardcolumn SuperH-H |
| | TSKgel SuperHM-N (6.0 mm I.D. × 15 cm × 1) |
| | TSKgel SuperH2500 (6.0 mm I.D. × 15 cm × 1) (each manufactured by Tosoh Corporation) |
| Column Temperature: | 40°C |
| Amount of Sample Injected: | 50 µL (a THF solution at a concentration of 2.0% by weight) |
| Standard: | monodisperse polystyrene |

(2) Proton Nuclear Magnetic Resonance Spectrum (¹H-NMR) Measurement Conditions

| | |
|---|---|
| Instrument: | AVANCE III 400 manufactured by BRUKER Corporation |
| Solvent: | CDCl₃ |
| Internal Standard: | tetramethylsilane (TMS) |

(3) Kinematic Viscosity Measurement Conditions
Measurement was conducted at 25°C by using a Cannon-Fenske-type viscometer.
(4) Viscosity Measurement Conditions
Measurement was conducted at 25°C by using a B-type rotational viscometer.

### [1] Synthesis of Cyclic Organohydrogenpolysiloxanes

### [Synthesis Example 1]

To a 500-mL four-necked flask equipped with a stirring device, a condenser, a dropping funnel, and a thermometer, 80 g of toluene and 115.2 g (0.48 mol) of 1,3,5,7-tetramethylcyclotetrasiloxane were added, and heated to 117°C by using an oil bath. To this flask, 0.05 g of 5% platinum metal-supporting carbon powder was added, and, with stirring, 48 g (0.4 mol) of vinyl norbornene (trade name: V0062, manufactured by Tokyo Chemical Industry Co., Ltd.; a substantially equimolar isomer mixture of 5-vinylbicyclo[2.2.1]hept-2-ene and 6-vinylbicyclo[2.2.1]hept-2-ene) was added dropwise over 16 minutes. After completion of the dropwise addition, the mixture was stirred under heating at 125°C for 16 hours, and cooled to room temperature. After that, the platinum metal-supporting carbon was removed by filtration, and toluene was removed by distillation under reduced pressure to obtain a colorless transparent viscous liquid (A-0). This liquid had a kinematic viscosity at 25°C of 2,500 mm²/s, and an SiH content of 7.2 mmol/g on average.

The obtained viscous liquid (A-0) was analyzed by ¹H-NMR and GPC measurements, and, as a result, identified as a mixture of the compounds shown below.
- Compounds having one tetramethylcyclotetrasiloxane ring: approximately 6% by mole (a representative example of a structural formula is shown by the following formula (9))

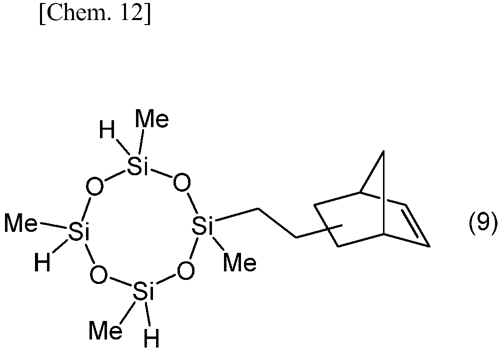

Compounds having two tetramethylcyclotetrasiloxane rings: approximately 25% by mole (a representative example of a structural formula is shown by the following formula (10))

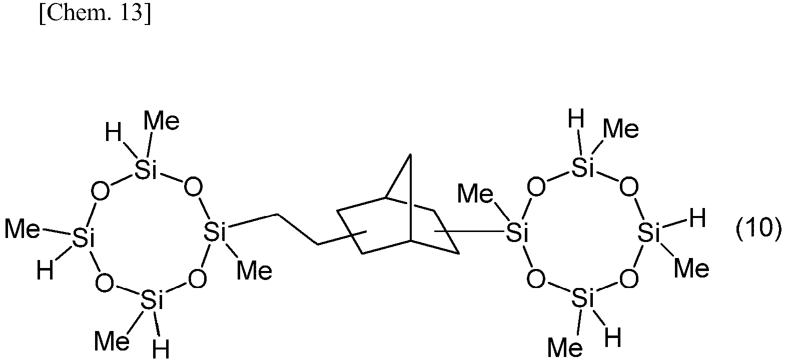

Compounds having three tetramethylcyclotetrasiloxane rings: approximately 16% by mole (a representative example of a structural formula is shown by the following formula (11), wherein m = 2)

Compounds having four tetramethylcyclotetrasiloxane rings: approximately 11% by mole (a representative example of a structural formula is shown by the following formula (11), wherein m = 3)

Compounds having 5 to 12 cyclotetrasiloxane rings: the rest (a representative example of a structural formula is shown by the following formula (11), wherein m = 4 to 11)

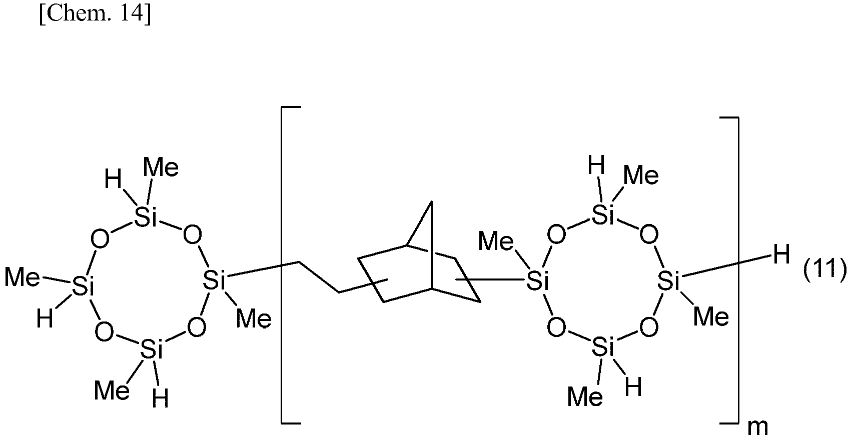

### [2] Synthesis of Epoxy Group-Containing Cyclic Organopolysiloxanes

### [Example 1-1]

In a 1-L separable flask equipped with a stirrer, a reflux condenser, a dropping funnel, and a thermometer, 124 parts (1 mol) of 1,2-epoxy-4-vinylcyclohexane, 121 parts of toluene, 37 parts of isopropanol, 0.12 parts of acetonitrile, and 0.0001 mol (in terms of platinum) of a solution of a platinum complex (Pt(0)-1,3-divinyltetramethyldisiloxane complex) in toluene were placed, and mixed by stirring. After that, when the inside temperature reached 85°C under heating, 116 parts (Si-H; 0.83 mol) of the viscous liquid (A-0) obtained in Synthesis Example 1 was added dropwise over one hour. The reaction occurred simultaneously with the dropwise addition, and heat was generated to gradually raise the temperature of the reaction liquid from 85°C. For this reason, the dropwise addition was continued while adjusting the temperature of the reaction liquid below 90°C. After completion of the dropwise addition, the reaction liquid was aged for 6 hours while heating the reaction liquid to keep the inside temperature at 90°C. Then, the amount of hydrogen gas generated from the reaction liquid was measured to make sure that no Si-H groups remained. After that, 0.02 parts of triphenylphosphine was added, and toluene, isopropanol, acetonitrile, and excess 1,2-epoxy-4-vinylcyclohexane were removed by distillation under reduced pressure (90°C, 5 mmHg) to thereby obtain a light yellow viscous liquid (A-1) having a viscosity at 25°C of 2,000 Pa·s or higher and an epoxy equivalent weight of 295 g/mol. From GPC and ¹H-NMR measurement results, the viscous liquid (A-1) was identified as a mixture represented by the following formula (12), wherein m = 1 to 11.

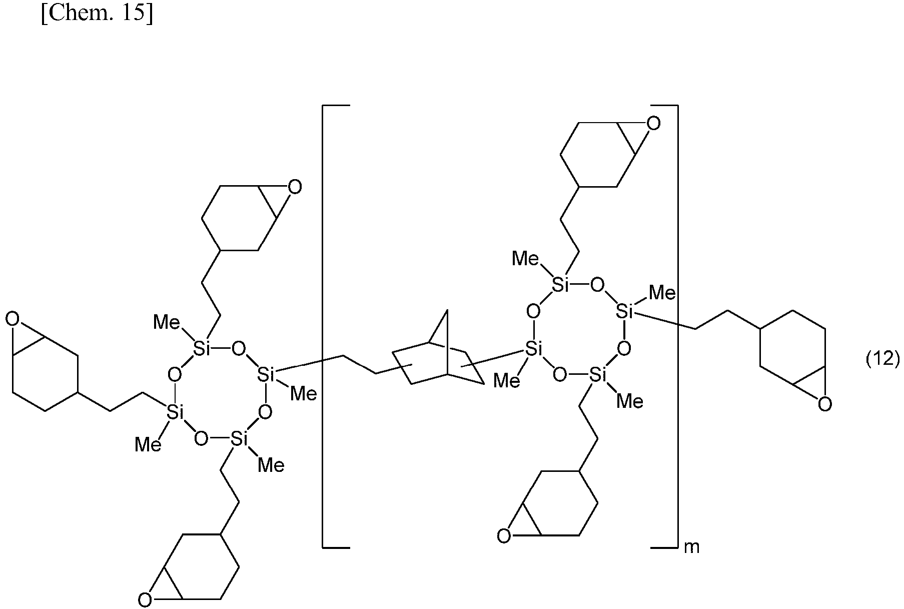

### [Example 1-2]

In a 1-L separable flask equipped with a stirrer, a reflux condenser, a dropping funnel, and a thermometer, 114 parts (1 mol) of allyl glycidyl ether, 121 parts of toluene, 37 parts of isopropanol, 0.12 parts of acetonitrile, and 0.0001 mol (in terms of platinum) of a solution of a platinum complex (Pt(0)-1,3-divinyltetramethyldisiloxane complex) in toluene were placed, and mixed by stirring. After that, when the inside temperature reached 85°C under heating, 116 parts (Si-H; 0.83 mol) of the viscous liquid (A-0) obtained in Synthesis Example was added dropwise over one hour. The reaction occurred simultaneously with the dropwise addition, and heat was generated to gradually raise the temperature of the reaction liquid from 85°C. For this reason, the dropwise addition was continued while adjusting the temperature of the reaction liquid below 90°C. After completion of the dropwise addition, the reaction liquid was aged for 6 hours while heating the reaction liquid to keep the inside temperature at 90°C. Then, the amount of hydrogen gas generated from the reaction liquid was measured to make sure that no Si-H groups remained. After that, 0.02 parts of triphenylphosphine was added, and toluene, isopropanol, acetonitrile, and excess allyl glycidyl ether were removed by distillation under reduced pressure (90°C, 5 mmHg) to thereby obtain a light yellow highly viscous oil (A-2) having a viscosity at 25°C of 2,000 Pa·s or higher and an epoxy equivalent weight of 282 g/mol. From GPC and ¹H-NMR measurement results, the light yellow highly viscous oil (A-2) was identified as a mixture represented by the following formula (13), wherein m = 1 to 11).

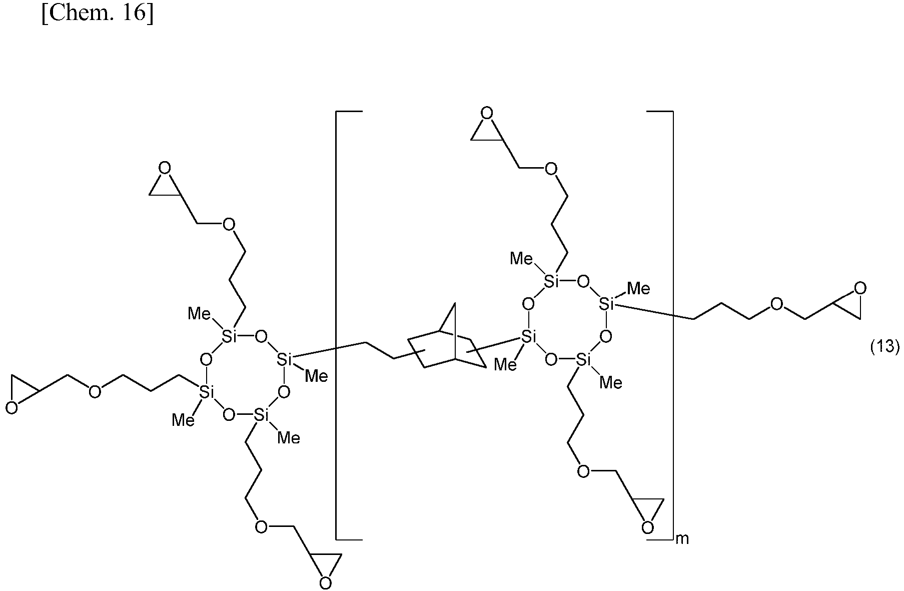

### [3] Preparation of Curable Compositions for Coating and Cured Products

### [Examples 2-1 to 2-3 and Comparative Examples 2-1 to 2-4]

Curable compositions for coating were prepared by mixing the components at the blending ratios shown in Table 1.

**[Table 1]**

| | Example | | | Comparative Example | | | |
|---|---|---|---|---|---|---|---|
| | 2-1 | 2-2 | 2-3 | 2-1 | 2-2 | 2-3 | 2-4 |
| (A-1) | 100 | | 50 | | | | |
| (A-2) | | 100 | | | | | |
| (B-1) | 2 | 2 | 2 | 2 | 2 | 2 | 2 |
| (C-1) | | | 50 | 100 | | | |
| (C-2) | | | | | 100 | | |
| (C-3) | | | | | | 100 | |
| (C-4) | | | | | | | 100 |
| Toluene | 100 | 100 | 100 | 100 | 100 | 100 | 100 |

(A-1): Epoxy group-containing cyclic organopolysiloxane obtained in Example 1-1
(A-2): Epoxy group-containing cyclic organopolysiloxane obtained in Example 1-2
(B-1): Non-antimony-based photo-cationic polymerization initiator ("CPI-200K" manufactured by San-Apro Ltd.)
(C-1): Cyclic siloxane represented by the following formula (14) (manufactured by Shin-Etsu Chemical Co., Ltd. under the trade name "X-40-2678", epoxy equivalent weight: 300)
(C-2): Cyclic siloxane represented by the following formula (15) (manufactured by Shin-Etsu Chemical Co., Ltd. under the trade name "KR-470", epoxy equivalent weight: 200)
(C-3): Dimethylsiloxane having epoxycyclohexyl structure groups as side chains and having a viscosity at 25°C of 280 mPa·s (manufactured by Shin-Etsu Chemical Co., Ltd. under the trade name "X-40-2715", epoxy equivalent weight 290)
(C-4): Hydrocarbon-based bifunctional epoxycyclohexyl compound (manufactured by Daicel Corporation, CELLOXIDE 2021P)

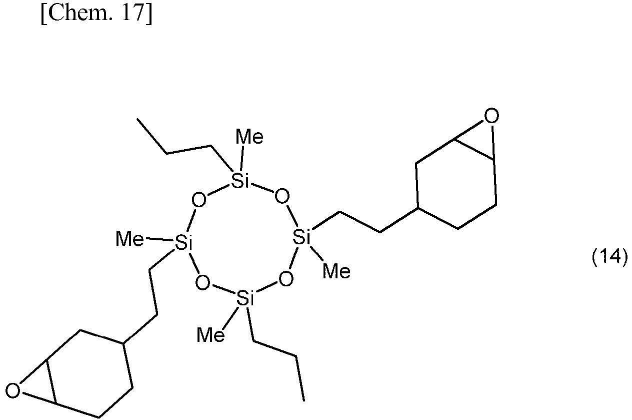

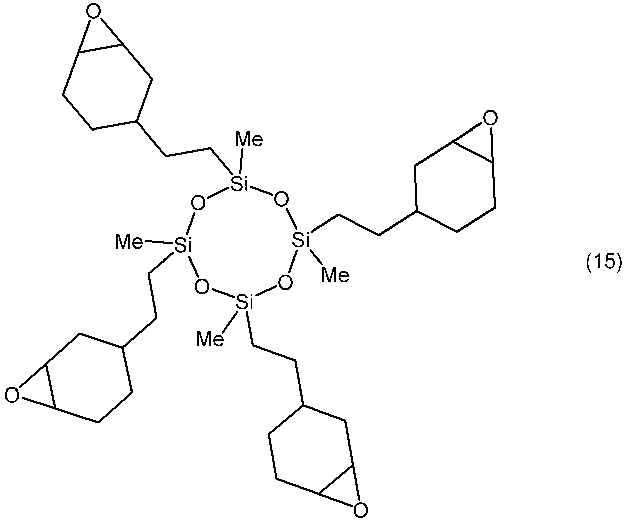

The curable compositions for coating obtained in Examples 2-1 to 2-3 and Comparative Examples 2-1 to 2-4 were applied onto the surfaces of polycarbonate NF-2000 sheets (4 mm in thickness × 15 cm in length × 10 cm in width) manufactured by Mitsubishi Engineering-Plastics Corporation with a bar coater No. 14, then dried in air for 15 minutes, and further heated at 80°C for 1 minute. Then, the coating films were cured by light irradiation at a dose of 600 mJ/cm² using a high-pressure mercury lamp to obtain test pieces.

Each test piece was subjected to the following evaluations. Table 2 shows the results.
(1) Appearance of Coating Film
   The coating film was visually observed, and the presence or absence of a defect was determined.
   O: No defect was present.
   △: Colored.
   ×: A defect such as an unintended substance, unevenness, or whitening was present.
(2) Initial Haze
   The haze value of the coated sheet was measured by using a haze meter NDH 5000 SP manufactured by Nippon Denshoku Industries Co., Ltd., and regarded as the initial haze.
(3) Scratch Resistance
   In accordance with ASTM 1044, the haze value was measured by using a Taber Abrasion tester equipped with an abrasion wheel CS-10F after 100 rotations under a 500-g load, and the difference between the haze value after the test and that before the test was regarded as the scratch resistance.
(4) Initial Adhesion
   In accordance with JIS K 5600, six cuts were made on the coating film at intervals of 2 mm in each of the longitudinal and transverse directions by using a razor blade to create 25 grid squares. Cellotape (registered trademark, manufactured by Nichiban Co., Ltd.) was firmly attached to the coating film, and then quickly peeled off to the near side at 90°. The number of squares (X) on which the coating film was not peeled off but remained was expressed by X/25.
(5) Boiling Adhesion
   The adhesion of the test piece after immersion in boiling water for 2 hours was evaluated in the same manner as the above-described initial adhesion.
(6) Pencil Hardness
   The pencil hardness was measured by a method according to the pencil scratch test described in JIS K 5600-5-4 under a 750-g load, and the results are presented.
(7) Crack Resistance (Impact Resistance)
   The crack resistance was measured by a method according to the falling-weight test described in JIS K 5600-5-3 using a DuPont impact tester, and the results are presented.

**[Table 2]**

| | Example | | | Comparative Example | | | |
|---|---|---|---|---|---|---|---|
| | 2-1 | 2-2 | 2-3 | 2-1 | 2-2 | 2-3 | 2-4 |
| Appearance of Coating Film | ○ | ○ | ○ | ○ | ○ | ○ | × |
| Initial Haze | 0.8 | 0.7 | 0.8 | 0.8 | 0.9 | 0.8 | 2.6 |
| Scratch Resistance | 9 | 8 | 10 | 18 | 7 | 15 | 15 |
| Initial Adhesion | 25 | 25 | 25 | 25 | 25 | 25 | 25 |
| Boiling Adhesion | 25 | 25 | 25 | 20 | 18 | 15 | 25 |
| Pencil Hardness | H | H | F | 2B | F | 2B | B |
| Crack Resistance | More than 50 cm | More than 50 cm | More than 50 cm | More than 50 cm | 10 cm | 30 cm | 20 cm |

As shown in Table 2, it can be understood that the coating films made from the curable compositions for coating of Examples 2-1 to 2-3 achieve transparency, hardness, adhesion, and crack resistance.

On the other hand, it can be understood that, in Comparative Example 2-1, the hardness and adhesion are insufficient, and hence the scratch resistance also tends to deteriorate; in Comparative Example 2-2, the hardness is excellent, but the flexibility of the film is poor, and the crack resistance is insufficient; in Comparative Example 2-3, the hardness and the flexibility were insufficient, and hence the scratch resistance tends to deteriorate; and in Comparative Example 2-4, the polycarbonate base material used was eroded, and hence the initial haze deteriorates, and further the hardness and the flexibility are insufficient.

### [4] Preparation of Curable Compositions for Sheet Forming

### [Examples 3-1 and 3-2 and Comparative Examples 3-1 to 3-4]

Curable compositions for sheet forming were prepared by mixing the components at the blending ratios shown in Table 3. Note that the abbreviations in the table are the same as those described above.

**[Table 3]**

| | Example | | Comparative Example | | | |
|---|---|---|---|---|---|---|
| | 3-1 | 3-2 | 3-1 | 3-2 | 3-3 | 3-4 |
| (A-1) | 50 | | | | | |
| (A-2) | | 50 | | | | |
| (B-1) | 2 | 2 | 2 | 2 | 2 | 2 |
| (C-1) | 50 | 50 | 100 | | | |
| (C-2) | | | | 100 | | |
| (C-3) | | | | | 100 | |
| (C-4) | | | | | | 100 |

The compositions obtained in Examples 3-1 and 3-2 and Comparative Examples 3-1 to 3-4 were poured into Teflon (registered trademark)-coated molds (0.3 mm in depth × 15 cm in length × 10 cm in width), then allowed to stand for 30 minutes, and cured by light irradiation at a dose of 600 mJ/cm² by using a high-pressure mercury lamp to obtain film-shaped test pieces.

Each test piece was subjected to the following evaluations. Table 4 shows the results.

### (8) Appearance of Film

The test piece obtained as above was visually observed, and the presence or absence of a defect was determined.
O: No defect was present.
×: A defect such as a crack was present.

### (9) Film Formability

At the time of removal from the mold, whether a self-supporting film was obtained was observed, and evaluation was made as follows.
○: The composition was successfully taken out as a film without any defect.
×: The composition was brittle and failed to be taken out as a film.

### (10) 90° Bendability

The test piece obtained as above was cut to have a width of 1 cm into a strip shape having a length of 10 cm, a width of 1 cm, and a thickness of 0.3 mm. With the two shorter-side portions of the strip shape pinched with tweezers, the film was bent at 90°. Here, the state of the film was observed, and evaluated as follows.
O: The film was not broken, and bendable.
△: The film was partially cracked but not broken.
×: The film was completely broken, and unbendable.

### (11) Storage Elastic Modulus, Tanδ (max)

The test piece obtained as above was cut to have a width of 1 cm into a strip shape having a length of 10 cm, a width of 1 cm, and a thickness of 0.3 mm, and subjected to measurement in an air atmosphere by using a viscoelasticity-measuring instrument DMA 7100 manufactured by Hitachi High-Tech Science Corporation in the tensile measurement mode while the temperature was raised from -50°C to 250°C at a temperature ramp rate of 10°C/min.

**[Table 4]**

| | Example | | Comparative Example | | | |
|---|---|---|---|---|---|---|
| | 3-1 | 3-2 | 3-1 | 3-2 | 3-3 | 3-4 |
| Appearance of Film | ○ | ○ | ○ | × | ○ | ○ |
| Film Formability | ○ | ○ | ○ | × | ○ | ○ |
| 90° Bendability | ○ | ○ | ○ | × | Δ | Δ |
| Storage Elastic Modulus (25°C) [GPa] | 1.9 | 2.1 | 0.9 | Unmeasurable | 1.5 | 1.2 |
| Tanδ (max) | 81 | 80 | 63 | Unmeasurable | 68 | 85 |

As shown in Table 4, it can be understood that the films obtained from the compositions of Examples 3-1 and 3-2 achieve formability, flexibility, and hardness (storage elastic modulus).

On the other hand, it can be understood that, in Comparative Example 3-1, the formability was good, but the hardness (storage elastic modulus) was low, and lowering in Tanδ (max), which corresponds the glass transition temperature, was observed; in Comparative Example 3-2, the cured product was extremely brittle, and low in crack resistance, and hence a film eligible for the measurements was not obtained; and in each of Comparative Examples 3-3 and 3-4, the flexibility was insufficient, and the film is poor in hardness (storage elastic modulus) in comparison with Examples.

As described above, the cured product obtained by using the epoxy group-containing cyclic organopolysiloxane of the present invention has both hardness and flexibility, and can be used suitably as cured formed products used for hard coating layers for plastic base materials, lens materials, sealants, and the like.

## Claims

1. An epoxy group-containing cyclic organopolysiloxane represented by the following general formula (1): 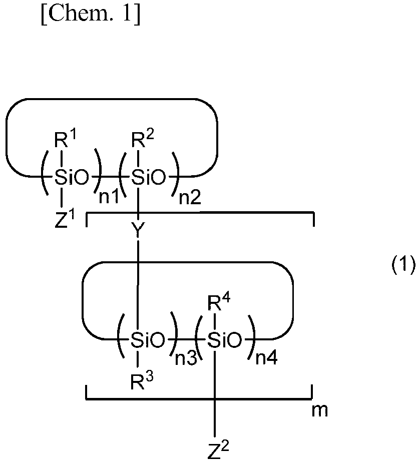 wherein R¹, R², R³, and R⁴ each independently represent a monovalent hydrocarbon group having 1 to 20 carbon atoms and optionally interrupted with an oxygen atom(s),
Y represents a divalent hydrocarbon group,
Z¹ and Z² each independently represent a monovalent hydrocarbon group having 1 to 20 carbon atoms and optionally interrupted with an oxygen atom(s), an epoxy group-containing monovalent organic group optionally interrupted with an oxygen atom(s), an alkoxysilylalkyl group, or a hydrogen atom, provided that at least one of Z¹ and Z² is an epoxy group-containing monovalent organic group optionally interrupted with an oxygen atom(s),
n1 and n2 each independently represent an integer that is 1 to 5 and that satisfies n1 + n2 = 3 to 6,
n3 and n4 each independently represent an integer that is 1 to 5 and that satisfies n3 + n4 = 3 to 6, and
m represents an integer of 1 to 11.

2. The epoxy group-containing cyclic organopolysiloxane according to claim 1, wherein R¹, R², R³, and R⁴ are methyl groups.

3. The epoxy group-containing cyclic organopolysiloxane according to claim 1, wherein Z¹ and Z² are one or more selected from a 3-glycidyloxypropyl group and a 2-(3,4-epoxycyclohexyl)ethyl group.

4. The epoxy group-containing cyclic organopolysiloxane according to claim 1, wherein Y is a divalent saturated hydrocarbon group having a polycyclic structure.

5. The epoxy group-containing cyclic organopolysiloxane according to claim 4, wherein Y is one or more selected from divalent saturated hydrocarbon groups represented by the following formulae (2a) and (2b): 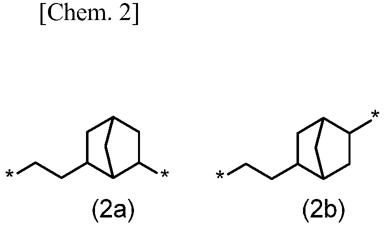 wherein asterisks (*) indicate points of attachment to silicon atoms, and the configuration of each asymmetric carbon may be either cis (exo) or trans (endo).

6. The epoxy group-containing cyclic organopolysiloxane according to claim 1, wherein n1 and n4 are 3, and n2 and n3 are 1.

7. The epoxy group-containing cyclic organopolysiloxane according to claim 1, wherein the epoxy functional group equivalent weight is 200 to 400 g/mol.

8. A curable composition, comprising:
(A) 100 parts by weight of the epoxy group-containing cyclic organopolysiloxane according to any one of claims 1 to 7, and
(B) 0.01 to 5 parts by weight of a curing agent.

9. The curable composition according to claim 8, comprising (C) 1 to 200 parts by weight of an epoxy group-containing compound other than (A).

10. The curable composition according to claim 9, wherein the curing agent is a photoacid generator.

11. A cured product obtained by curing the curable composition according to claim 9.
